# EUROPÄISCHE PATENTANMELDUNG

(11) **EP 2 620 277 A1**
(43) Veröffentlichungstag der Anmeldung: **31.07.2013**
(21) Anmeldenummer: 12152698.2
(22) Anmeldetag: 26.01.2012
(51) Int. Cl.: B32B 25/14, B32B 25/04, B32B 27/30, F16J 15/10

(54) **Mehrschichtsysteme**

(71) Anmelder: LANXESS Deutschland GmbH, 51369 Leverkusen (DE)
(72) Erfinder: Kelbch, Stefan, 53804 Much (DE); Isenberg-Schulz, Olaf, 40764 Langenfeld (DE)

(57) **Zusammenfassung**

Die vorliegende Erfindung betrifft ein Mehrschichtsystem umfassend
(1) eine erste Schicht, enthaltend mindestens einen Fluorkautschuk, und
(2) eine zweite Schicht, enthaltend mindestens ein Basis-Elastomermaterial ausgewählt aus der Gruppe bestehend aus Acrylat-Kautschuk (ACM), Ethylen-Acrylat-Kautschuk (AEM) oder Ethylen-Vinylacetat-Copolymere (EVM) und Kombinationen hiervon.

## Beschreibung

Die vorliegende Erfindung betrifft Mehrschichtsysteme, die einen Fluorkautschuk und ein Basis-elastomermaterial umfasst sowie ein Verfahren zur Herstellung derselben.

Fluorhaltige Polymere (d. h. Fluorpolymere oder fluorierte Polymer) sind eine wichtige Klasse von Polymeren, die sich durch hohe Wärmebeständigkeit und chemische Beständigkeit, wie etwa Lösungsmittelbeständigkeit, auszeichnen. Fluorelastomere, insbesondere die Copolymere von Vinylidenfluorid mit anderen ethylenisch ungesättigten, halogenierten Monomeren, wie Hexafluorpropylen, sind speziell bei Hochtemperaturanwendungen, wie bei Dichtungen und Auskleidungen, von Nutzen. Mehrschichtenkonstruktionen, die ein fluoriertes Polymere enthalten, werden beispielsweise in Kraftstoffleitungsschläuchen und ähnlichen Behältern eingesetzt.

Vulkanisationsprodukte von Fluorpolymeren (Fluorkautschuken) weisen gute Wärmestabilität, chemische Beständigkeit, Ölbeständigkeit und Witterungsbeständigkeit auf, so dass sie in großem Umfang als Dichtungsmaterialien wie z. B. Flachdichtungen, O-Ringe, Öldichtungen, Dichtungen im Allgemeinen auf den Gebieten der Automobilindustrie und der ölhydraulischen Industrie sowie der allgemein mechanischen Industrie Verwendung finden. Es ist jedoch nicht immer möglich, Fluorkautschuk mit verschiedenen Metallen oder Kunststoffen zu in der Technik an vielen Einsatzgebieten benötigten Verbundkörpern zu verarbeiten. Aus dem Stand der Technik sind daher viele Verfahren und Bindemitteln vorgeschlagen worden, um einwandfreie Verbunde zwischen verschiedenen Metallen oder Kunststoffen und Fluorelastomeren zu gewährleisten.

Bei der Herstellung von Öldichtungen beispielsweise ist eine durch Vulkanisation induzierte Haftung zwischen dem Fluorkautschuk und Metallen oder Kunststoffen eine Voraussetzung. Um diese Voraussetzung zu erfüllen, ist es aus dem Stand der Technik z. B. bekannt, ein Silanhaftmittel oder ähnliches auf Phosphat-beschichtete Stahlbleche aufzutragen, anschließend einzubrennen und eine nicht-vulkanisierte Fluorkautschukverbindung darauf aufzutragen und dann eine Vulkanisation unter Druck durchzuführen.

JP-A-3-37251 beschreibt eine fluorierte Elastomerzusammensetzung, die einen Terpolymerelastomer-Gummi aus Vinylidenfluorid/Tetrafluorethylen/Kohlenwasserstoff-Olefin, eine Polyhydroxyverbindung, eine organische Oniumverbindung und eine fluorierte aliphatische Sulfonylverbindung aufweist, wobei N-substituierte Terfluoralkylsulfonamide als aliphatische fluorierte Sulfonylverbindungen als Haftungsvermittler verwendet wird.

Aus dem Stand der Technik ist ebenfalls bekannt, dass die Oberflächenbehandlung einer oder beider Schichten erforderlich ist, um die Haftung zwischen Fluorkautschuken und Metallen oder Kunststoffen zu erwirken. Beispielsweise werden Fluorpolymerschichten zunächst mit einer ionisierten Gasatmosphäre (Plasma) behandelt und anschließend wird eine Schicht eines zweiten Materials darauf aufgebracht.

WO-A-99/00455 offenbart ein Verfahren zum Verbinden eines Fluorpolymers mit einem nicht-fluorierten Polymer. Dabei wird im ersten Schritt eine Zusammensetzung aus einem Amin und einem ersten nicht-fluorierten Polymer hergestellt, um ein Polymer mit einer Amin Funktionalität zu bilden; im zweiten Schritt wird dieses Polymer mit einem zweiten nicht-fluorierten Polymer verbunden und im dritten Schritt wird ein Mehrschichtgegenstand gebildet, wobei der zweischichtige nicht-fluorierten Polymer Verbund aus dem zweiten Schritt mit einem Fluorpolymer zusammengebracht wird.

Des Weiteren ist aus dem Stand der Technik ein Kunststoffverbund mit einer Polyamidharzoberflächenschicht und einer Fluorharzoberflächenschicht bekannt.

WO-A-00/52084 offenbart eine Mischung aus einem Fluorpolymer, einem primären oder sekundären Di- oder Polyamin, einem Organoonium-Katalysator und gegebenenfalls einem oder mehreren Klebrigmachern.

Um die Haftung von Fluorkautschuken an Metallen zu ermöglichen, wird beispielsweise in DE 196 12 732 eine Fluorkautschukzusammensetzung offenbart, die zusätzlich ein Vernetzungsmittel enthält. Das Vernetzungsmittel ist beispielsweise Diamin.

Einen weiteren Ansatz zur Verbesserung der Haftung von Fluorkautschuken an Metallen ist beispielsweise aus DE 69814179 offenbart. Hierbei wird die nicht-fluorierte Polymerschicht mit einer Base behandelt.

Ebenfalls aus DE 69226900 bekannt ist das Hinzufügen eines quaternären Ammoniumsalz-Derivats eines Triazinthiols zu der Fluorkautschukmischung.

Aus WO 02/36705 ist eine Klebemasse, basierend auf einem oder mehreren α-Olefinenvinylacetat Polymeren bekannt. Es gibt allerdings dort keine Anhaltspunkte, dass diese Selbstklebemasse auch für Fluorkautschuke geeignet ist.

Ein weiterer Stand der Technik ist die DE 2005 009 664. Dort wird ein Mehrschicht-Verbundsystem beschrieben, wobei der Haftvermittler auf Basis von Ethylen-Vinylacetat-Copolymerisat zwischen zwei chemisch verschieden aufgebauten Folien eingesetzt wird. Die Beschichtung bzw. die Haftung mit Fluorkautschuken findet ebenfalls hier keine Anwendung.

Aufgabe der vorliegenden Erfindung war es daher, ein Mehrschichtsystem vorzuschlagen, wobei der darin enthaltene Fluorkautschuk eine sichere Haftung aufweist.

Die Aufgabe wird durch ein Mehrschichtsystem gelöst, das eine erste Schicht enthaltend mindestens einen Fluorkautschuk und eine zweite Schicht enthaltend mindestens ein Basis-Elastomermaterial, ausgewählt aus der Gruppe bestehend aus Acrylat-Kautschuk (ACM), Ethylen-Acrylat-Kautschuk (AEM) oder Ethylen-Vinylacetat-Copolymere (EVM) und Kombinationen hiervon, umfasst.

In einer anderen bevorzugten Ausführungsform besteht die zweite Schicht aus mindestens einem Basis-Elastomermaterial, ausgewählt aus Acrylat-Kautschuk (ACM), Ethylen-Acrylat-Kautschuk (AEM) oder Ethylen-Vinylacetat-Copolymere (EVM) und Kombinationen hiervon.

Überaschenderweise wurde festgestellt, dass bei dieser Kombination eine Trennung der beiden Schichten nicht mehr möglich war.

Als Fluorkautschuke sind grundsätzlich alle dem Fachmann bekannten Fluorkautschuke geeignet. Bevorzugt handelt es sich bei dem erfindungsgemäß einsetzbaren Fluorkautschuk um einen Fluorkautschuk, aufgebaut aus einem oder mehreren der folgenden Monomere: gegebenenfalls substituierte Ethylene, die neben Fluor Wasserstoff und/oder Chlor enthalten können, z.B. Vinylidenfluorid, Tetrafluorethylen und Chlortrifluorethylen, fluorierte 1-Alkene mit 3 bis 8 Kohlenstoffatomen, z.B. Hexafluorpropylen, 3,3,3-Trifluorpropylen, Chlorpentafluorpropylen, Hexafluorisobuten und/oder perfluorierte Vinylether der Formel

CF₂ = CFOX

mit X = C₁-C₃-Perfluoralkyl oder -(CF₂-CFY-O)ₙ-R_{F},
wobei
- n: 1 bis 4
- Y: F oder CF₃ und
- R_{F}: C₁ - C₃-Perfluoralkyl bedeuten.

Bevorzugt handelt es sich bei dem erfindungsgemäß einsetzbaren mindestens einen Fluorkautschuk um ein Homo-, Co- oder Terpolymer aufgebaut aus einem oder mehreren der vorstehend genannten Monomere. Besonders bevorzugt werden als Monomere eine Kombination aus Vinylidenfluorid, Hexafluorpropylen und/oder Tetrafluorethylen eingesetzt, wobei z.B. ein Copolymer aufgebaut auf Vinylidenfluorid und Tetrafluorethylen oder ein Copolymer aufgebaut auf Vinylidenfluorid und Hexafluorpropylen oder ein Terpolymer aufgebaut auf Vinylidenfluorid, Tetrafluorethylen und Hexafluorpropylen erhalten wird.

Des Weiteren kann der mindestens eine Fluorkautschuk - zusätzlich zu den vorstehend genannten Monomeren - aus den vorstehend genannten perfluorierten Vinylethern aufgebaut sein, dabei kann es sich um einen perfluorierte Alkylvinylether handeln, z.B. um Perfluor-(methyl-vinyl-ether).

Zusätzlich zu den vorstehend genannten Monomeren können die Fluorkautschuke aus mindestens einem zur peroxidischen Vernetzung geeigneten Monomeren (Cure Site Monomer = CSM), z. B. brom- oder iodhaltige Cure Site Monomere, wie BTFB, 4-Brom-3,3,4',4'-Tetrafluorbuten-1, BTFE, Bromtrifluorethen, 1-Brom-2,2'-Difluoroethen, Vinylbromid, Perfluorallylbromid, 3,3'-Difluorallylbromid und 4-Brom-Perflurobuten-1 oder entsprechende Iod-Verbindungen aufgebaut sein.

Vernetzungsaktive Iod/Brom-Kettenenden oder Iod/Brom-terminierte Seitenketten können auch über den Einsatz von Iod/Brom-haltigen Kettenverlängerern wie z. B. CF₃I/CF₃Br oder Methylenjodid/bromid eingebracht werden.

Ein Beispiel für einen entsprechenden Fluorkautschuk stellt ein Terpolymer aufgebaut auf Vinylidenfluorid, Tetrafluorethylen, Hexafluorpropylen und mindestens einem zur peroxidischen Vernetzung geeigneten Monomeren dar.

Das zur peroxidischen Vernetzung geeignete Monomer (Cure Site Monomer = CSM) weist bevorzugt die folgende Formel auf:

CF₂ = CFHal

mit
Hal Cl, Br oder I, bevorzugt Br oder I.

Beispielsweise kann der mindestens eine Fluorkautschuk aus der folgenden monomeren Zusammensetzung erhältlich sein:
20 bis 90 mol-% Vinylidenfluorid,
10 bis 80 mol-% Hexafluorpropylen,
0 bis 40 mol-% Tetrafluorethylen und
0 bis 25 mol-% perfluorierte Vinylether der Formel

   CF₂ = CFOX

   mit
   - X: C₁-C₃-Perfluoralkyl oder -(CF₂-CFY-O)ₙ-R_{F},
   wobei
   - n: 1 bis 4,
   - Y: F oder CF₃ und
   - R_{F}: C₁-C₃-Perfluoralkyl bedeuten,
0 bis 25 mol-% eines zur peroxidischen Vernetzung geeigneten Monomeren, wobei die Gesamtsumme der Komponenten 100 mol% ergibt.

Ganz besonders bevorzugt handelt es sich bei dem erfindungsgemäß eingesetzten Fluorkautschuk um ein Copolymer aufgebaut aus 30 bis 80 mol.-% Vinylidenfluorid und 10 bis 40 mol.-% Hexafluorpropylen, ein Terpolymer aufgebaut aus 30 bis 85 mol.-% Vinylidenflourid, 5 bis 30 mol.-% Tetrafluorethylen und 10 bis 30 mol.-% Hexafluorpropylen und 0 bis 20 mol.-% mindestens einem zur peroxidischen Vernetzung geeigneten Monomeren, oder ein Terpolymer aufgebaut aus 30 bis 80 mol.-% Vinylidenflourid, 5 bis 30 mol.-% Tetrafluorethylen, 10 bis 30 mol-% Hexafluorpropylen 0 bis 30% perfluorierte Alkylvinylether und 0 bis 20 mol.-% mindestens einem zur peroxidischen Vernetzung geeigneten Monomeren, wobei die Gesamtsumme der Komponenten des jeweiligen Co- oder Terpolymers jeweils 100 mol% ergibt.

Das zahlenmittlere Molekulargewicht des erfindungsgemäß eingesetzten Fluorkautschuks beträgt im Allgemeinen 25 bis 100 kg/mol, bevorzugt 40 bis 80 kg/mol. Die Molekulargewichtsverteilung M_{w}/Mₙ beträgt im Allgemeinen 1,5 bis 10. Das zahlenmittlere Molekulargewicht und das gewichtsmittlere Molekulargewicht werden mittels Gelpermeationschromatographie mit THF als Elutionsmittel ermittelt (DIN 55672-1).

Die Mooney-Viskositäten (ML1+10 bei 121°C) des erfindungsgemäß eingesetzten Fluorkautschuks liegen im Allgemeinen zwischen 1 bis 170, bevorzugt zwischen 10 bis 80. Die Mooney-Viskosität wird nach DIN 53523 bestimmt.

Der erfindungsgemäß eingesetzte mindestens eine Fluorkautschuk wird im Allgemeinen gemäß dem Stand der Technik bekannten Verfahren hergestellt. Bevorzugt erfolgt die Herstellung des Fluorkautschuks durch wässrige Emulsions- oder Suspensionspolymerisation (Ullmann's Encyclopedia of Ind. Chem., Vol. A-11, VCH-Verlagsgesellschaft, Weinheim, 1988, S. 417 ff.). Es ist ebenfalls möglich, den erfindungsgemäß eingesetzten mindestens einen Fluorkautschuk gemäß dem in DE 19844338 A1 beschriebenen Verfahren herzustellen.

Vorzugsweise handelt es sich bei dem Fluorkautschuk um ein vulkanisiertes, und besonders bevorzugt um getempertes, Fluorkautschukvulkanisat. Erstaunlicherweise war es möglich, ein Fluorkautschukvulkanisat mit der zweiten Schicht aus dem erfindungsgemäßen Basis-Elastomermaterial zu verbinden.

Das Fluorkautschukvulkanisat enthält vorzugsweise die üblichen Zuschlagstoffe, wie etwa Füllstoffe (z. B. Russ oder anorganische Füllstoffe), Verarbeitungshilfsmittel (z. B. Fettamine), Weichmacher (z. B. Esterweichmacher), Metalloxide (z. B. Ca(OH)2, MgO, ZnO), Vernetzungssysteme (ionisch) (z. B Bisphenol AF und onium catalyst) oder peroxidische Vernetzungssysteme (z. B. Peroxid und TAIC/TAC/TRIM).

Des Weiteren weist der Fluorgehalt des Fluorkautschuks im Bereich von 55 Gew.-% bis 80 Gew.-%, bevorzugt im Bereich von 60 Gew.-% bis 73 Gew.-% und besonders bevorzugt 65 Gew.-% bis 71 Gew.-%, bezogen auf den Fluorkautschuk.

Als Basis-Elastomermaterial können Ethylen-Vinylacetat-Copolymer (EVM), Acrylatkautschuke (ACM) und/oder Ethylen-Acrylat-Kautschuk (AEM) eingesetzt werden, die frei von Zusätzen, wie etwa Füllstoffen, Alterungsschutzmitteln, Verarbeitungshilfsmitteln, Weichmachern, Harzen, Silanen sind. Die Zusätze können aber in einer anderen Ausführung enthalten sein.

Bevorzugt kann für das erfindungsgemäße Mehrschichtsystem ein Ethylen-Vinylacetat-Copolymer (EVM) mit einem Vinylacetatgehalt von > 50 Gew.-%, vorzugsweise > 60 Gew.-% bezogen auf das Ethylen-Vinylacetat-Copolymer, eingesetzt werden. Die Viskosität der Ethylen-Vinylacetat-Copolymere beträgt 5 - 90, bevorzugt 15-70 Mooneyeinheiten (Mooney Viskosität 1+4 bei 100°C).

Der Gelanteil von nicht vorvernetzten Ethylen-Vinylacetat-Copolymeren ist < 2 Gew.-%, bevorzugt < 1 Gew.-%. Zur Messung des Gelanteils wird das Polymer in Toluol (12,5g/l) für 22h bei 25°C gelöst, dann ultrazentrifugiert (2h, 25°C bei 20000 Umdrehungen/Minute) und gravimetrisch bestimmt.

EVMs werden vorzugsweise mittels Lösungspolymerisation hergestellt (Werner Hofmann: Rubber Technology Handbook, Carl Hanser Verlag, ISBN 3-446-14895-7, Seite 100ff).

Möglich ist auch der Einsatz von einem Acrylatkautschuk (ACM), d.h. Copolymeren aus Acrylestern (z.B. Ethylacrylat, Butylacrylat, Ethylmethoxy- oder Ethylethoxyacrylat und Kombinationen daraus) sowie Vernetzungsaktiven Monomeren, wie Chlorethylvinylether, Vinylchloracetat, Chlormethylacrylsäure oder deren Ethylester, Glycidylether, Methylol-Verbindungen, Imido-Ester, Hydroxy-Acrylate (z.B beta-Hydroxy-Ethylacrylat), Carboxylverbindungen (z.B. Methacrylsäure) oder Alkylidennorbornen. Die Herstellung der ACM erfolgt nach bekannter Emulsionspolymerisation wie etwa in Werner Hofmann: Rubber Technology Handbook, Carl Hanser Verlag, ISBN 3-446-14895-7, Seite 107ff beschrieben.

Ebenfalls in Frage kommt ein Ethylen-Acrylat-Kautschuk (AEM), einem Terpolymer aus Ethylen und Methacrylat mit einem vernetzungsaktiven Monomer mit Carboxylgruppen (z.B. Maleinsäuremonoethylester) mit einem Methacrylatgehalt von 30 Gew.-% - 80 Gew.-% und einem Gehalt an vernetzungsaktivem Monomer zwischen 0,5 Gew.-% und 20 Gew.-%. Die Herstellung von AEM erfolgt mittels Lösungspolymerisation. Es ist ebenfalls möglich, AEM gemäß dem in US2003/204025 A1 beschriebenen Verfahren herzustellen.

Eine bevorzugte Ausführung des erfindungsgemäßen Mehrschichtsystems umfasst eine erste Schicht aus einem Fluorkautschukvulkanisat mit einem Fluorgehalt > 60 Gew.-%, vorzugsweise größer als 65 Gew.-% bezogen auf dem Fluorkautschuk und eine zweite Schicht, ausgebildet aus einem Ethylen-Vinylacetat-Copolymer, wobei das Ethylen-Vinylacetat-Copolymer einen Vinylacetatgehalt von > 50 Gew.-% bezogen auf das Ethylen-Vinylacetat-Copolymer aufweist.

Die Verwendung des erfindungsgemäßen Mehrschichtsystems zur Herstellung von Klebebändern, Auskleidungen und Haftsysteme ist ebenso Gegenstand der Erfindung.

Ein weiterer Gegenstand der Erfindung ist ein Verfahren zur Herstellung des erfindungsgemäßen Mehrschichtsystems, wobei die erste Schicht hergestellt durch Vulkanisation des mindestens Fluorkautschuks und im nächsten Schritt die zweite Schicht basierend jeweils auf EVM, AEM oder ECM, welche durch wässrige Emulsions- oder Lösungspolymerisation hergestellt wurde, mit der ersten Schicht in Kontakt gebracht wird.

Bevorzugt kann nach der Vulkanisation ein anschließender Nachtemperung erfolgen.

Das in Kontakt bringen kann mittels (Co-)Extrusionsbeschichtung, Pressbeschichtung, Lösungsbeschichtung, Lösungssprühen, Emulsionsbeschichtung oder Tiefdruckbeschichtung erfolgen. Eine weitere Möglichkeit ist mit Hilfe der Co-Extrusionsbeschichtung, Kaschierverfahren oder Glas/Breitschichtextrusionsverfahren oder Kalandrierung. Hierbei wird zweite Schicht auf die erste Schicht aufgebracht.

Bevorzugt kann das Inkontaktbringen der Schichten bei erhöhter Temperatur und bei erhöhtem Druck durchgeführt werden.

Nachfolgend wird anhand von Beispielen die Erfindung näher erläutert:

### Beispiele

### 1. Herstellung der Fluorkautschukvulkanisate

Zur Herstellung einer vernetzbaren Zusammensetzung werden auf einem gut gekühlten Zweiwalzenmischwerk die einzelnen Komponenten der entsprechenden nachstehend genannten Mischungen bei einer Walzentemperatur von 20°C innerhalb von typischerweise 10 min eingearbeitet.

### 1.1 FKM-Vulkanisate mit bisphenolischer Vernetzung

### Copolymer Mischungen A

| | |
|---|---|
| 100 phr | Levatherm® F 6623 oder 6625¹⁾ |
| 30 phr | Luvomaxx® N990²⁾ |
| 6 phr | Ca(OH)₂³⁾ |
| 3 phr | MgO⁴⁾ |
| 4 phr | Levatherm® FC30⁵⁾ |
| 2 phr | Levatherm® FC20⁶⁾ |

1) FKM-Copolymer aufgebaut aus Vinylidenfluorid und Hexafluorpropylen von Lanxess Deutschland GmbH
2) Ruß der Fa. Lehmann & Voss
3) Ca(OH)₂ von Fa. Sturge
4) MgO von Fa. Rhein Chemie Rheinau GmbH
5) Masterbatch von Lanxess Deutschland GmbH, bestehend aus 50 Gew.-% Bisphenol AF (Fa. VWR-Lianyungang) und Levatherm® F 6623
6) Masterbatch von Lanxess Deutschland GmbH, bestehend aus 33 Gew.-% Benzyltriphenylphosphoniumchlorid (Fa. Organica) und Levatherm® F6623

### Terpolymer Mischungen B

| | |
|---|---|
| 100 phr | Levatherm® F 6833 oder 6836¹⁾ |
| 30 phr | Luvomaxx® N990²⁾ |
| 6 phr | Ca(OH)₂³⁾ |
| 3 phr | MgO⁴⁾ |
| 4 phr | Levatherm® FC30⁵⁾ |
| 3 phr | Levatherm® FC20⁶⁾ |

1) FKM-Terpolymer aufgebaut aus Vinylidenfluorid, Hexafluorpropylen und Tetrafluorethylen von Lanxess Deutschland GmbH
2) Ruß der Fa. Lehmann & Voss
3) Ca(OH)₂ von Fa. Sturge
4) MgO von Fa. Rhein Chemie Rheinau GmbH
5) Masterbatch aus 50 Gew.-% Bisphenol AF (Fa. VWR-Lianyungang) und Levatherm® F 6623
6) Masterbatch aus 33 Gew.-% Benzyltriphenylphosphoniumchlorid (Fa. Organica) und Levatherm® F6623

### Terpolymer+CSM: Mischungen C

| | |
|---|---|
| 100 phr | Levatherm® F 7043 oder 7046 ¹⁾ |
| 30 phr | Luvomaxx® N990²⁾ |
| 3 phr | Luperox® 101XL45-SP2³⁾ |
| 3 phr | TAIC⁴⁾ |
| 3 phr | ZnO⁵⁾ |

1) FKM-Terpolymer aufgebaut aus Vinylidenfluorid, Tetrafluorethylen und Hexafluorpropylen und einem cure site monomer (CSM) von Lanxess Deutschland GmbH
2) Ruß der Fa. Lehmann & Voss
3) Peroxid der Fa. Arkema
4) Coaktivator 70% Triallylisocyanurat der Fa. Kettlitz
5) ZnO von der Lanxess Deutschland GmbH

Die jeweilige Mischung wird bei 177 °C in 100 x 100 x 2 mm Plattenformen für etwa 10 Minuten bei 120 bar druckvulkanisiert und anschließend in einem Umluftofen nachvulkanisiert (24 h bei 230°C). Die so hergestellten Platten stellen die erste Schicht dar.

### 2. Herstellung der zweiten Schicht aus einem Basis-Elastomermaterial bestehend aus EVM, ACM oder AEM

Es wurden folgende Basis-Elastomermaterialien verwendet.

**EVM** der Lanxess Deutschland GmbH:
● Levapren® 400 (40% Vinylacetat)
● Levapren® 500 (50% Vinylacetat)
● Levapren® 600 (60% Vinylacetat)
● Levapren® 700 (70% Vinylacetat)
● Levapren® 800 (80% Vinylacetat)
● Levapren® 900 (90% Vinylacetat)

**ACM** der Fa. Nippon Zeon:
● NipolAR® 12

**AEM** der Fa. Dupont:
● Vamac® G
● Vamac® GLS
● Vamac® DP

Das jeweilige reine **Basis-Elastomermaterial** (EVM, ACM oder AEM) wurde auf einer kalten Walze (20°C) zu einem Kautschukfell ausgezogen; danach wurden Platten der Größe 200x200x1mm bei einem Druck von 200 bar, 110°C für 10 Minuten zwischen Teflonfolien abgepresst. Diese stellen jeweils die zweite Schicht dar.

### 3. Herstellung des erfindungsgemäßen Mehrschichtsystems

Die vulkanisierte und getemperte Fluorkautschukvulkanisatplatte (erste Schicht) wurde mit der jeweiligen EVM, ACM bzw. AEM Platte (zweite Schicht) dubliert. Dieses Zweischichtsystem wurde bei 177°C für 10 Minuten zwischen Teflonfolie bei einem Druck von 120 bar abgepresst. Das resultierte erfindungsgemäße Mehrschichtsystem wird für den Trennfestigkeitstest, angelehnt an DIN 53530, verwendet.

### 4. Zusammenfassung der Ergebnisse

Die Trennfestigkeit der Mehrschichtsysteme wurde in Anlehnung an DIN 53530 mittels einer Zugprüfmaschine getestet. Es wurden aus den erfindungsgemäßen Mehrschichtsystemen jeweils Zweischicht-Probekörper der Länge 200mm, Breite 25mm und Dicke 2x1mmm verwendet.

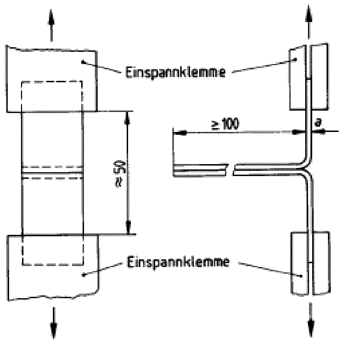

Jeweils eine Lage wurde in die Aufnahmebacken der Zugmaschine eingespannt und gemäß DIN 53530 gezogen. Abb. 1 zeigt eine schematische Versuchsanordnung für den Trennfestigkeitstest.

Für die Auswertung sind nur zwei sinnvolle Klassifikationen möglich:
0: Keine überragende Haftung: d. h. die Zweischicht-Probekörpern lassen sich voneinander trennen, ohne dass kohäsive Rissprozesse zu beobachten sind.
1: Keine Trennung möglich: d. h. Riss in der zweiten Schicht (Polymerschicht aus den Basis-Elastomermaterialien EVM, ACM, AEM).

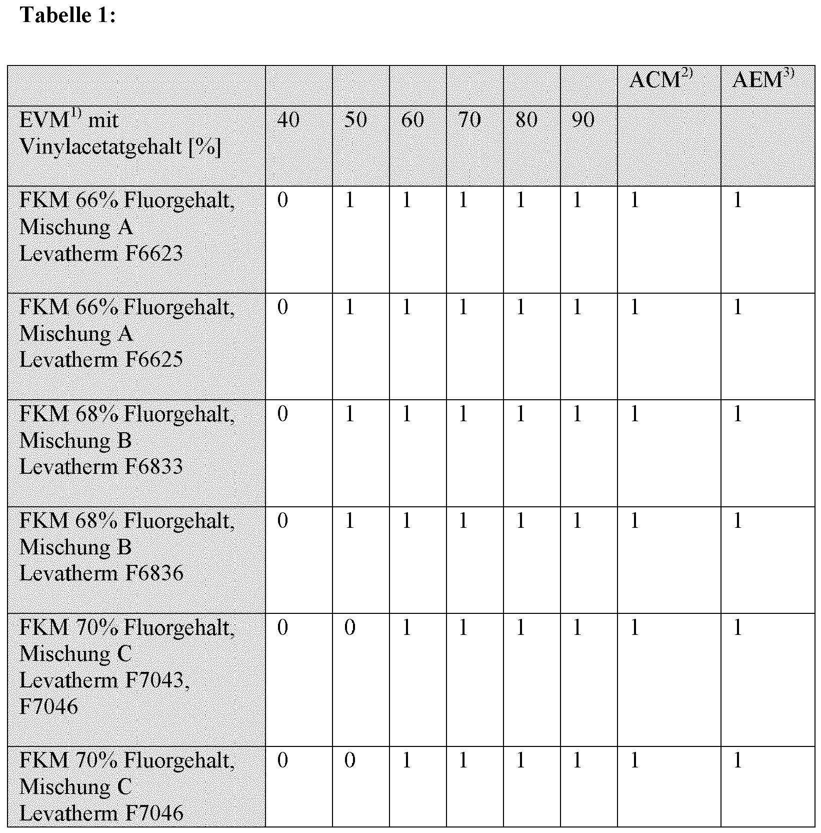

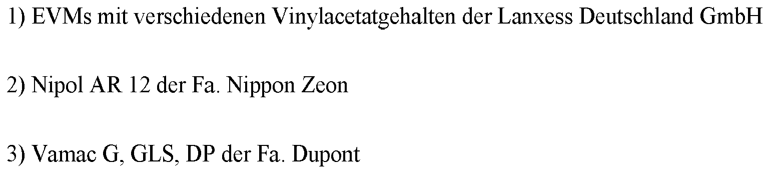

Abhängig vom FKM-Polymertyp wurde eine untrennbare Haftung ab einem gewissen Vinylaceatgehalt (VA-Gehalt) des EVM festgestellt. So zeigt Levapren 400, also einen VA-Gehalt von 40 Gew.-%, noch keine nennenswerte Haftung auf dem Fluorkautschukvulkanisat, ab einem VA-Gehalt von 50% sind die Mehrschichtsysteme jedoch untrennbar miteinander verbunden.

Bei einem Fluorgehalt größer als 70 Gew.-% bezogen auf den Fluorkautschuk konnte eine nennenswerte Haftung erst bei EVM mit einem VA-Gehalt von 60 Gew.-% (Levapren 600) festgestellt werden. Es ist daher anzunehmen, dass je mehr Fluor im FKM ist, desto höher muss auch der VA-Gehalt des EVMs sein, um eine unwiederbringliche Haftung zu ermöglichen.

Für das untersuchte ACM Polymer und alle drei AEM-Polymere der Fa. Dupont wurde eine vollständige Haftung festgestellt.

## Patentansprüche

1. Mehrschichtsystem umfassend
(1) eine erste Schicht, enthaltend mindestens einen Fluorkautschuk, und
(2) eine zweite Schicht, enthaltend mindestens ein Basis-Elastomermaterial ausgewählt aus der Gruppe bestehend aus Acrylat-Kautschuk (ACM), Ethylen-Acrylat-Kautschuk (AEM) oder Ethylen-Vinylacetat-Copolymere (EVM) und Kombinationen hiervon.

2. Mehrschichtsystem nach Anspruch 1, **dadurch gekennzeichnet, dass** der Fluorkautschuk aus der folgenden monomeren Zusammensetzung erhältlich ist:
20 bis 90 mol-% Vinylidenfluorid,
10 bis 80 mol-% Hexafluorpropylen,
0 bis 40 mol-% Tetrafluorethylen und
0 bis 25 mol-% perfluorierte Vinylether der Formel CF₂ = CFOX
mit X C₁-C₃-Perfluoralkyl oder -(CF₂-CFY-O)ₙ-R_{F},
wobei
n 1 bis 4,
Y F oder CF₃ und
R_{F} C₁-C₃-Perfluoralkyl bedeuten,
0 bis 25 mol-% eines zur peroxidischen Vernetzung geeigneten Monomeren,
wobei die Gesamtsumme der Komponenten 100 mol% ergibt.

3. Mehrschichtsystem nach Anspruch 2, **dadurch gekennzeichnet, dass** es sich bei dem Fluorkautschuk um ein vulkanisiertes Fluorkautschukvulkanisat handelt.

4. Mehrschichtsystem nach Anspruch 3, **dadurch gekennzeichnet, dass** der Fluorgehalt des Fluorkautschuks im Bereich von 55 Gew.-% bis 80 Gew.-%, bevorzugt im Bereich von 60 Gew.-% - 73 Gew.-% und besonders bevorzugt im Bereich von 65 Gew.-% -71 Gew.-% bezogen auf den Fluorkautschuk beträgt.

5. Mehrschichtsystem nach Anspruch 4, **dadurch gekennzeichnet, dass** der Acrylat-Kautschuk ein Copolymer ist, enthaltend mindestens einen Acrylester, ausgewählt aus Ethylacrylat, Butylacrylat, Ethylmethoxy- oder Ethylethoxyacrylat und Kombinationen daraus, und/oder vernetzungsaktiven Monomeren, ausgewählt aus Chlorethylvinylether, Vinylchloracetat, Chlormethylacrylsäure oder deren Ethylester, Glycidylether, Methylol-Verbindungen, Imido-Ester, Hydroxy-Acrylate (z. B. beta-Hydroxy-Ethylacrylat), Carboxylverbindungen (z.B. Methacrylsäure) oder Alkylidennorbornen.

6. Mehrschichtsystem nach Anspruch 5, **dadurch gekennzeichnet, dass** der Ethylen-Acrylat-Kautschuk (AEM) ein Terpolymer aus Ethylen und Methacrylat mit einem vernetzungsaktiven Monomer mit Carboxylgruppen mit einem Methacrylatgehalt von 30 Gew. % - 80 Gew.% und einem Gehalt an vernetzungsaktivem Monomer zwischen 0,5 Gew.% und 20 Gew.%.

7. Mehrschichtsystem nach Anspruch 6, **dadurch gekennzeichnet, dass** das Ethylen-Vinylacetat-Copolymer (EVM) einen Vinylacetatgehalt größer als 50 Gew.-%, vorzugsweise größer als 60 Gew.-% bezogen auf das Ethylen-Vinylacetat-Copolymer, beträgt.

8. Mehrschichtsystem nach Anspruch 1, umfassend
(1) eine erste Schicht aus einem Fluorkautschukvulkanisat mit einem Fluorgehalt von größer als 60 Gew.-%, vorzugsweise 65 Gew.-%, bezogen auf den Fluorkautschuk und
(2) eine zweite Schicht ausgebildet aus einem Ethylen-Vinylacetat-Copolymer (EVM), wobei das Ethylen-Vinylacetat-Copolymer einen Vinylacetatgehalt größer als 50 Gew.-% bezogen auf das Ethylen-Vinylacetat-Copolymer aufweist.

9. Verwendung eines Mehrschichtsystems nach einem der oben genannten Ansprüche zur Herstellung von Klebebändern, Auskleidungen und Haftsystemen.

10. Verfahren zur Herstellung eines Mehrschichtsystems nach Ansprüchen 1 bis 8, **dadurch gekennzeichnet, dass**
(1) die erste Schicht vulkanisiert, optional nachgetempert wird,
(2) die zweite Schicht durch wässrige Emulsions- oder Suspensionpolymerisation hergestellt wird, und dann
(3) die erste Schicht und die zweite Schicht in Kontakt gebracht werden.

11. Verfahren nach Anspruch 10, **dadurch gekennzeichnet, dass** das Inkontaktbringen mittels (Co-)Extrusionsbeschichtung, Pressbeschichtung, Lösungsbeschichtung, Lösungssprühen, Emulsionsbeschichtung, Kalandrierung, Kaschierverfahren oder Glas/Breitschichtextrusionsverfahren oder Tiefdruckbeschichtung erfolgt, wobei die zweite Schicht auf die erste Schicht aufgebracht wird.
